# EUROPÄISCHE PATENTSCHRIFT

(11) **EP 3 494 018 B1**
(45) Veröffentlichungstag und Bekanntmachung des Hinweises auf die Patenterteilung: **18.06.2025**
(21) Anmeldenummer: 17742370.4
(22) Anmeldetag: 17.07.2017
(51) Int. Cl.: B60T 8/36, F16K 7/17

(54) **MEMBRANVENTILANORDNUNG**
MEMBRANE VALVE ARRANGEMENT
ENSEMBLE SOUPAPE À MEMBRANE

(30) Priorität: 02.08.2016 DE 102016009402
(43) Veröffentlichungstag der Anmeldung: 12.06.2019
(73) Patentinhaber: ZF CV Systems Europe BV, 1170 Brussels (BE)
(72) Erfinder: BIALON, Rafal, 55-200 Olawa (PL); HÖFLER, Siegfried, 30165 Hannover (DE); TEICHMANN, Andreas, 30916 Isernhagen (DE); TORHOFF, Ingo, 30890 Barsinghausen (DE)
(74) Vertreter: Rabe, Dirk-Heinrich
(86) Internationale Anmeldenummer: PCT/EP2017/000858
(87) Internationale Veröffentlichungsnummer: WO 2018/024360

(56) Entgegenhaltungen:
- EP-A1- 1 408 389
- WO-A1-2010/012425
- WO-A1-2017/102043
- DE-A1- 2 136 446
- DE-C1- 19 638 965
- DE-C2- 2 713 599

## Beschreibung

Die Erfindung betrifft eine Membranventilanordnung, beispielsweise in einer Ventileinrichtung eines Anti-Blockiersystems eines Kraftfahrzeugs, aufweisend eine aus einem elastischen Werkstoff bestehende scheibenförmige Ventilmembran sowie eine Scheibe mit einer zentrischen Durchbrechung, wobei die Ventilmembran mit einer ihrer beiden Seiten auf der Scheibe angeordnet ist, wobei die Ventilmembran an ihrer scheibenfernen Seite radial außen einen umlaufenden Dichtungswulst aufweist, wobei die Scheibe zusammen mit der Ventilmembran zwischen einem Gehäuseoberteil und einem Gehäuseunterteil der Membranventilanordnung angeordnet ist, und bei dem der Dichtungswulst zwischen dem Gehäuseoberteil und dem Gehäuseunterteil eingespannt ist.

Eine derartige Membranventilanordnung ist aus der DE 21 36 446 A1 bekannt. Der Dichtungswulst ist dabei in einer von einem Gehäuseoberteil und einem Gehäuseunterteil gebildeten Ringnut aufgenommen. Die Dichtungsmembran wird dabei zwischen dem Gehäuseoberteil und dem Gehäuseunterteil bis zu ihrem äußeren Rand von einer Scheibe unterstützt. Der Dichtungswulst der Dichtungsmembran ist auf der von der Scheibe abgewandten Seite ausgebildet und füllt die Ringnut vollständig aus. Die Bearbeitungstoleranzen bei der Herstellung der Ringnut führen dazu, dass der Dichtungswulst zwar in der gewünschten Weise in der Ringnut mit einer vorgegebenen Klemmkraft eingespannt ist, welche für eine dauerhafte Dichtwirkung genau richtig ist und nicht zu einer Verhärtung des elastischen Werkstoffs der Dichtungsmembran führt, jedoch kann auch der Fall eintreten, dass die Dichtwirkung nicht ausreicht, oder dass der Dichtungswulst zu stark durch die Klemmkraft gepresst wird und im Dauerbetrieb eine die Dichtungsmembran beschädigende Verhärtung erleidet.

WO2010/012425 betrifft ein Membranventil mit einer Elastomermembrane zur Betätigung eines Verschlussgliedes eines Ventilsitzes, welche über eine außenradiale Dichtwulst zwischen einem Ventilgehäuse und einem Gehäusedeckel angeordnet ist und durch eine seitens Gehäusedeckel ausgeformte Steuerdruckkammer beaufschlagbar ist, welche mit einer gewölbten Stützkontur versehen ist, an der die obere Membranfläche der Elastomermembrane im geöffneten Zustand des Verschlussgliedes flächig zur Anlage kommt.

EP1408389 betrifft ein Drucksteuerventil, welches ein Fluiddruck auf der Seite des Abwärtsfluss das gleiche als der Fluiddruck auf der Seite des Aufwärtsfluss hält.

DE2713599 betrifft Strömungsmittelpumpen und insbesondere mit einer flexiblen Membran arbeitende Pumpen, welche entweder Flüssigkeiten oder Gase wirksam zu fördern vermögen.

DE 19638965 betrifft ein fluidbetätigtes Membranventil, bei welchem innerhalb eines Gehäuses mindestens ein kreisrunder Ventilsitz angeordnet ist, welcher von einem membranartigen Betätigungselement vom Ventilsitz öffnend oder auf denselben schliessend betätigbar ist.

Vor diesem Hintergrund liegt der Erfindung die Aufgabe zugrunde, eine Membranventilanordnung vorzuschlagen, bei der die Dichtwirkung im Bereich des Dichtungswulstes weitgehend unabhängig von Fertigungstoleranzen und der wirkenden Klemmkraft verbessert ist.

Gelöst wird diese Aufgabe mit einer Membranventilanordnung mit den Merkmalen des Anspruchs 1. Der Schutzbereich des Patents soll mit Unterstützung des Wortlauts des Anspruchs entschieden werden.

Demnach geht die Erfindung aus von einer Membranventilanordnung, beispielsweise in einer Ventileinrichtung eines Anti-Blockiersystems eines Kraftfahrzeugs, aufweisend eine aus einem elastischen Werkstoff bestehende scheibenförmige Ventilmembran sowie eine Scheibe mit einer zentrischen Durchbrechung, wobei die Ventilmembran mit einer ihrer beiden Seiten auf der Scheibe angeordnet ist, wobei die Ventilmembran an ihrer scheibenfernen Seite radial außen einen umlaufenden Dichtungswulst aufweist, wobei die Scheibe zusammen mit der Ventilmembran zwischen einem Gehäuseoberteil und einem Gehäuseunterteil der Membranventilanordnung angeordnet ist, und bei dem der Dichtungswulst zwischen dem Gehäuseoberteil und dem Gehäuseunterteil eingespannt ist. Bei dieser Membranventilanordnung ist zur Lösung der gestellten Aufgabe vorgesehen, dass am Gehäuseoberteil und/oder am Gehäuseunterteil im Bereich des Dichtungswulstes und/oder im radial äußeren Randbereich der die Ventilmembran unterstützenden Scheibe zusätzliche Dichtungsanordnungen vorhanden sind.

Die zusätzlichen Dichtungsanordnungen sind so gestaltet, dass deren Dichtwirkung weitgehend unabhängig von Fertigungstoleranzen und der wirkenden Klemmkraft zwischen dem Gehäuseoberteil und dem Gehäuseunterteil ist.

Gemäß einer Beispielerklärung dieses Konstruktionsprinzips kann vorgesehen sein, dass der Dichtungswulst der Ventilmembran in einer axialen Ringnut aufgenommen ist, welche durch einen axialen Absatz im Gehäuseoberteil und einem diesen radial umfassenden, ringförmigen axialen Vorsprung des Gehäuseunterteils gebildet ist, wobei diese axiale Ringnut so bemessen ist, dass der beim Verspannen des Gehäuseoberteils gegen das Gehäuseunterteil verdrängte elastische Werkstoff der Ventilmembran in wenigstens einen dafür bestimmten Aufnahmeraum der Ringnut gelangt, und wobei der wenigstens eine Aufnahmeraum zusammen mit dem verdrängten Werkstoff die zusätzliche Dichtungsanordnung bildet. Bei dem Aufnahmeraum handelt es sich bevorzugt um einen solchen Teil der Ringnut, welcher im unbelasteten Fall, also bei noch nicht vollständig zusammengefügten Gehäuseunterteil und Gehäuseoberteil, von dem Dichtungswulst der Ventilmembran nicht ausgefüllt wird.

An dieser Stelle sei angemerkt, dass bei der gerade genannten sowie allen noch zu beschreibenden Ausführungsformen der ringförmige, axiale Vorsprung des Gehäuseunterteils durch eine kreisförmige Ausnehmung in der gehäuseoberteilnahen Stirnseite des Gehäuseunterteils erzeugt sein kann, ohne dass darauf jeweils gesondert hingewiesen wird.

Gemäß einer exemplarischen Gestaltung kann vorgesehen sein, dass die Ringnut wenigstens eine axiale Schrägfläche sowie eine Radialfläche aufweist, dass die Ringnut im Bereich der Radialfläche einen Aufnahmeraum bildet, welcher ohne axiale Krafteinwirkung auf das Gehäuseoberteils und/oder das Gehäuseunterteil von dem Dichtungswulst nicht ausgefüllt ist, und dass nach dem Verspannen des Gehäuseoberteils gegen das Gehäuseunterteil in den Aufnahmeraum verdrängter elastischer Werkstoff des Dichtungswulstes der Ventilmembran angeordnet ist, wobei der Aufnahmeraum und der dort hinein verdrängte Werkstoff des Dichtungswulstes die zusätzliche axiale Dichtungsanordnung bilden.

Erfindungsgemäß kann vorgesehen sein, dass in dem ringförmigen axialen Vorsprung des Gehäuseunterteils im Bereich des Dichtungswulstes ein Aufnahmeraum durch eine radiale Umfangsnut ausgebildet ist, welche beim Verspannen des Gehäuseoberteils gegen das Gehäuseunterteil verdrängten elastischen Werkstoff der Ventilmembran aufnimmt und eine zusätzliche, radiale und/oder axiale Dichtungsanordnung bildet.

Erfindungsgemäß ist auch vorgesehen sein, dass die den Aufnahmeraum bildende radiale Umfangsnut im axialen Vorsprung des Gehäuseunterteils eine umlaufende Schrägfläche, eine umlaufende achsparallele Fläche sowie eine radiale, umlaufende Fläche aufweist, dass an der umlaufenden Schrägfläche eine zusätzliche radiale Dichtwirkung erreicht wird, und dass dieser Aufnahmeraum zusammen mit dem verdrängten Werkstoff des Dichtungswulstes die zusätzliche radiale Dichtungsanordnung bildet.

Eine Ausführungsbeispiel sieht vor, dass in einem radial äußeren, ringförmigen, axialen Vorsprung der die Ventilmembran unterstützenden Scheibe im Bereich des Dichtungswulstes ein Aufnahmeraum durch eine radiale Umfangsnut gebildet ist, welche beim Verspannen des Gehäuseoberteils gegen das Gehäuseunterteil verdrängten elastischen Werkstoff der Ventilmembran aufnimmt und eine zusätzliche, radiale und/oder axiale Dichtungsanordnung bildet.

Zusätzlich kann in einem anderen Ausführungsbeispiel zwischen dem Gehäuseoberteil und dem Gehäuseunterteil im Bereich einer Oberseite des Dichtungswulstes ein ringförmiger Spalt als Aufnahmeraum für den beim Verspannen des Gehäuseoberteils gegen das Gehäuseunterteil verdrängten elastischen Werkstoff ausgebildet sein, wobei dieser ringförmige Spalt zusammen mit dem da hinein verdrängten Werkstoff eine zusätzliche radiale Dichtanordnung bildet.

Ein weitere Ausführungsbeispiel der zusätzlichen Dichtungsanordnung sieht vor, dass die die Ringnut axial begrenzende Radialfläche des Gehäuseoberteils und/oder die der Dichtungsmembran zugewandte Oberfläche der Scheibe einen axial ausgerichteten Ringwulst aufweisen, dass in dem ringförmigen, axialen Vorsprung des Gehäuseunterteils oder in dem ringförmigen, axialen Vorsprung der Scheibe eine Umfangsnut als Aufnahmeraum für den beim Verspannen des Gehäuseoberteils gegen das Gehäuseunterteil verdrängten elastischen Werkstoff ausgebildet ist, und dass der durch die Umfangsnut gebildete Aufnahmeraum zusammen mit dem wenigstens einen Ringwulst eine zusätzliche axiale Dichtungsanordnung bildet.

Weiter kann in einem anderen Ausführungsbeispiel vorgesehen sein, dass das Gehäuseunterteil eine ringförmige, radiale Auflagefläche und die die Ventilmembran unterstützende Scheibe eine dazu komplementäre Ringfläche aufweisen, und dass in der Auflagefläche des Gehäuseunterteils und/oder in der Ringfläche der Scheibe eine Ringnut zur Aufnahme eines O-Rings angeordnet ist, und wobei der O-Ring in der Ringnut eine zusätzliche axiale Dichtungsanordnung bildet.

Eine weitere Möglichkeit, eine zusätzliche Dichtungsanordnung in der Membranventilanordnung zu bilden, kann darin bestehen, dass das Gehäuseunterteil eine ringförmige, radiale Auflagefläche für die die Ventilmembran unterstützende Scheibe aufweist, dass diese Auflagefläche des Gehäuseunterteils oder eine dieser Auflagefläche zugewandte, komplementäre Ringfläche der die Ventilmembran unterstützende Scheibe mit einer angespritzten Beschichtung aus Silikonkautschuk oder einer anvulkanisierten Beschichtung aus Gummi versehen ist, wobei die an die Auflagefläche des Gehäuseunterteils oder an die komplementäre Ringfläche der Scheibe angespritzte Beschichtung aus Silikonkautschuk oder die anvulkanisierte Beschichtung aus Gummi eine zusätzliche axiale Dichtungsanordnung bildet.

Eine andere Bauform der zusätzlichen Dichtungsanordnung in der Membranventilanordnung sieht vor, dass der Außendurchmesser der die Ventilmembran unterstützenden Scheibe kleiner ist als der Innendurchmesser des ringförmigen axialen Vorsprungs des Gehäuseunterteils, und dass der hierdurch gebildete Ringraum zwischen der Scheibe und dem Vorsprung durch eine an die radiale Außenfläche der Scheibe angespritzte Dichtung aus Silikonkautschuk oder eine an die radiale Außenfläche anvulkanisierte Dichtung aus Gummi ausgefüllt ist, wobei die an die radiale Außenfläche der Scheibe angespritzte Dichtung eine zusätzliche axiale Dichtungsanordnung bildet.

Ein weitere Ausführungsbeispiel der zusätzlichen axialen Dichtungsanordnung kann darin bestehen, dass im Außenumfang der die Ventilmembran unterstützenden Scheibe eine Umfangsnut zur Aufnahme eines O-Rings ausgebildet ist, wobei die Umfangsnut mit dem O-Ring eine zusätzliche, axiale Dichtungsanordnung bildet. Hierbei kann vorgesehen sein, dass die Umfangsnut einen rechteckigen Querschnitt oder dreieckigen Querschnitt aufweist.

Eine weitere Möglichkeit, eine Membranventilanordnung auszubilden, kann darin bestehen, dass die die Ventilmembran unterstützende Scheibe gegenüber dem Gehäuseunterteil durch einen Klebstoff als Dichtungsmittel oder durch ein in Mikrokapseln eingeschlossenes Dichtungsmittel oder durch ein flüssiges Dichtungsmittel abgedichtet ist, wobei das Dichtungsmittel eine zusätzliche axiale und/oder radiale Dichtungsanordnung bildet.

Hierbei kann vorgesehen sein, dass das Dichtungsmittel wenigstens zwischen einer ringförmigen, radialen Auflagefläche am Gehäuseunterteil für die die Ventilmembran unterstützende Scheibe und einer dieser Auflagefläche zugewandten, komplementären Ringfläche der Scheibe angeordnet ist.

Abweichend davon kann vorgesehen sein, dass das Dichtungsmittel zwischen der radialen Außenfläche der die Ventilmembran unterstützenden Scheibe und einer radialen Innenoberfläche des ringförmigen axialen Vorsprungs des Gehäuseunterteils angeordnet ist.

Weiter kann vorgesehen sein, dass das Dichtungsmittel im Querschnitt L-förmig zwischen der radialen Außenfläche der die Ventilmembran unterstützenden Scheibe und der radialen Innenoberfläche des ringförmigen axialen Vorsprungs des Gehäuseunterteils sowie zwischen der ringförmigen, radialen Auflagefläche am Gehäuseunterteil für die die Ventilmembran unterstützende Scheibe und einer dieser Auflagefläche zugewandten, komplementären Ringfläche der Scheibe angeordnet ist.

Schließlich kann in diesem Zusammenhang vorgesehen sein, dass das Dichtungsmittel im Querschnitt C-förmig an dem radial äußeren Rand der die Ventilmembran unterstützenden Scheibe angeordnet ist.

Eine weitere Möglichkeit, eine zusätzliche Dichtungsanordnung zu verwirklichen, kann darin bestehen, dass die die Ventilmembran unterstützende Scheibe mit dichtendem radialem Presssitz am Gehäuseunterteil angeordnet ist, wobei der Presssitz eine zusätzliche axiale Dichtungsanordnung bildet.

Schließlich kann vorgesehen sein, dass die die Ventilmembran unterstützende Scheibe einen ringförmigen, den Dichtungswulst an der Ventilmembran radial einfassenden axialen Vorsprung aufweist, und dass die Scheibe einschließlich ihres ringförmigen axialen Vorsprungs mit dichtendem radialem Presssitz am Gehäuseunterteil angeordnet ist, und dadurch eine zusätzliche axiale Dichtungsanordnung bildet.

Die Erfindung wird nachstehend anhand mehrerer Ausführungsbeispiele von zusätzlichen Dichtungsanordnungen weiter erläutert. In der beigefügten Zeichnung zeigen die Figuren 1 bis 4 vier verschiedene Ausführungsbeispiele von zusätzlichen Dichtungsanordnungen im Bereich des Dichtungswulstes an der Dichtungsmembran, und die Figuren 5 bis 20 zusätzliche Dichtungsanordnungen im Bereich einer eine Ventilmembran unterstützenden Scheibe, wobei die Ausführungsbeispiele von Figuren 6 bis 11 nicht zu der Erfindung gemäß dem Hauptanspruch 1 gehören.

In den Figuren ist von einer Membranventilanordnung in einer Ventileinrichtung eines Antiblockiersystems nur ein Ausschnitt mit den erfindungsgemäßen, zusätzlichen Dichtungsanordnungen dargestellt, wobei gleiche Teile mit denselben Bezugsziffern bezeichnet sind.

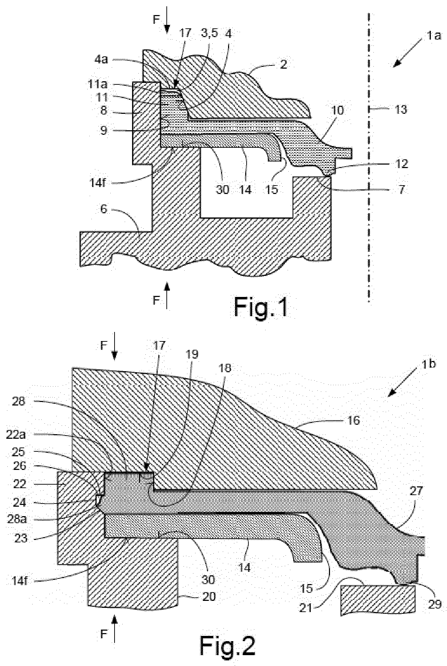

Die in Fig. 1 dargestellte Membranventilanordnung 1a weist ein Gehäuseoberteil 2 und ein Gehäuseunterteil 6 auf, welche unter radial äußeres Einklemmen einer Ventilmembran 10 und einer die Ventilmembran 10 axial unterstützenden Scheibe 14 zusammengefügt sind. Im Klemmbereich ist durch eine axiale Schrägfläche 4 und eine Radialfläche 4a am Gehäuseoberteil 2 sowie eine axiale Ringfläche 9 an einem ringförmigen, axialen Vorsprung 8 des Gehäuseunterteils 6 eine Ringnut 3 ausgebildet. Das Gehäuseunterteil 6 weist ferner radial benachbart zu einer Mittelachse 13 der Membranventilanordnung 1a einen Ventilsitz 7 für eine an der Ventilmembran 10 ausgebildete Dichtlippe 12 auf.

An der Ventilmembran 10 ist radial außen ein Dichtungswulst 11 ausgebildet, der in der durch die axiale Schrägfläche 4, die Radialfläche 4a und die Ringfläche 9 gebildete axiale Ringnut 3 aufgenommen ist. Hierbei ist diese Ringnut 3 so bemessen, dass unterhalb der Radialfläche 4a des Gehäuseoberteils 2 ein Aufnahmeraum 5 vorhanden ist, in welchem bei noch nicht endgültig zusammengefügten Gehäuseteilen 2, 6 kein Material des Dichtungswulstes 11 vorhanden ist.

Axial zwischen der Ventilmembran 10 und dem Gehäuseunterteil 6 ist die die Ventilmembran 10 unterstützende Scheibe 14 angeordnet, welche eine zur Dichtlippe 12 der Ventilmembran 10 benachbarte axiale Durchbrechung 15 aufweist. Diese Scheibe 14 liegt mit ihrer komplementären Ringfläche 14 f auf einer ringförmigen Auflagefläche 30 des Gehäuseunterteils 6 axial auf.

Sobald das Gehäuseoberteil 2 und das Gehäuseunterteil 6 mit einer Klemmkraft F zusammengefügt und dabei gegeneinander verspannt werden, wird der ursprünglich im Axialschnitt weitgehend rechteckig ausgebildete Dichtungswulst 11 in der aus der axialen Schrägfläche 4, der Radialfläche 4a und der Ringfläche 9 am ringförmigen, axialen Vorsprung 8 gebildeten Ringnut 3 radial zusammengedrückt. Hierbei wird Material des Dichtungswulstes 11 in Richtung des Aufnahmeraumes 5 gedrückt, der durch den verdrängten elastischen Werkstoff 11a erkennbar teilweise ausgefüllt ist.

Im Vergleich zum eingangs erwähnten Stand der Technik, der eine rechteckige Ringnut zur Aufnahme eines rechteckigen Dichtungswulstes mit gleichem Querschnitt an der Ventilmembran 10 zeigt, ist bei der Ausführungsform gemäß Fig. 1 eine zusätzliche Dichtungsanordnung durch die Ringnut 3 aus der axialen Schrägfläche 4 und der Radialfläche 4a im Gehäuseoberteil 2 sowie die Ringfläche 9 am ringförmigen, axialen Vorsprung 8 des Gehäuseunterteils 6 in Verbindung mit dem plastisch verformten Dichtungswulst 11 und dem in den Aufnahmeraum 5 verdrängten elastischen Werkstoff 11a gebildet. Hierbei ist der Aufnahmeraum 5 so bemessen ist, dass er auch unter ungünstigen Toleranzbedingungen nicht vollständig durch den verdrängten elastischen Werkstoff 11a des Dichtungswulst 11 ausgefüllt ist. Hierdurch wirken auf den Dichtungswulst 11 keine zu hohen Klemmkräfte F, die andernfalls zu einer nachteiligen Verhärtung des elastischen Werkstoffs der Ventilmembran 10 führen könnten. Durch die geschilderte Ausbildung des Aufnahmeraumes 5 in der Ringnut 3 und durch den dort hinein gedrückten elastischen Werkstoff 11a des Dichtungswulstes 11 ist eine axiale Verlängerung der wirksamen Dichtfläche des Dichtungswulstes 11 vorteilhaft erreicht worden, wodurch eine zusätzliche axiale Dichtungsanordnung gebildet ist, welche zu einer insgesamt verbesserten Abdichtung führt.

Die erfindungsgemäße Ausführungsform gemäß Fig. 2 zeigt eine ausschnittweise Darstellung einer Membranventilanordnung 1b mit einem Gehäuseoberteil 16 und einem Gehäuseunterteil 20, zwischen denen radial außen ebenfalls eine Ventilmembran 27 und eine diese Ventilmembran 27 unterstützende Scheibe 14 eingeklemmt sind. Das Gehäuseoberteil 16 weist radial innen eine achsparallele Fläche 18 und eine daran anschließende Radialfläche 19 auf. Am Gehäuseunterteil 20 ist radial innen eine axiale Ringfläche 22a ausgebildet, die an einem ringförmigen axialen Vorsprung 22 des Gehäuseunterteils 20 ausgebildet ist. Der axiale Vorsprung 22 kann durch eine kreisförmige Ausnehmung an der gehäuseoberteilnahen Stirnseite des Gehäuseunterteils 20 erzeugt worden sein. Die genannten Flächen 18, 19, 22a bilden zusammen eine rechteckige Ringnut 17. In diese Ringnut 17 ist ein radial außen an der Ventilmembran 27 ausgebildeter Dichtungswulst 28 angeordnet, welcher im Axialschnitt einen rechteckigen Querschnitt aufweist.

Auch diese Ventilmembran 27 liegt radial innen mit einer Dichtlippe 29 auf einem Ventilsitz 21 auf, der radial innen an dem Gehäuseunterteil 20 ausgebildet ist. Die Ventilmembran 27 ist axial durch eine Scheibe 14 abgestützt, welche mit einer Ringfläche 14f auf einer zugeordneten Auflagefläche 30 des Gehäuseunterteils 20 aufliegt. Hierbei sind die Ventilmembran 27 und die Scheibe 14 mittels einer Klemmkraft F zwischen dem Gehäuseunterteil 20 und dem Gehäuseoberteil 16 eingespannt.

In der erwähnten axialen Ringfläche 22a im axialen Vorsprung 22 des Gehäuseunterteils 20 ist eine durch eine umlaufende Schrägfläche 23, eine achsparallele Fläche 24 und eine radiale, umlaufende Fläche 25 gebildete Umfangsnut ausgebildet, welche so bemessen ist, dass ein beim Verspannen des Gehäuseoberteils 16 gegen das Gehäuseunterteil 20 verdrängter elastischer Werkstoff 28a des Dichtungswulstes 28 einen durch die Umfangsnut gebildeten Aufnahmeraum 26 nur teilweise ausfüllt, wobei der Aufnahmeraum 26 zusammen mit dem verdrängten Werkstoff 28a eine zusätzliche Dichtungsanordnung bildet.

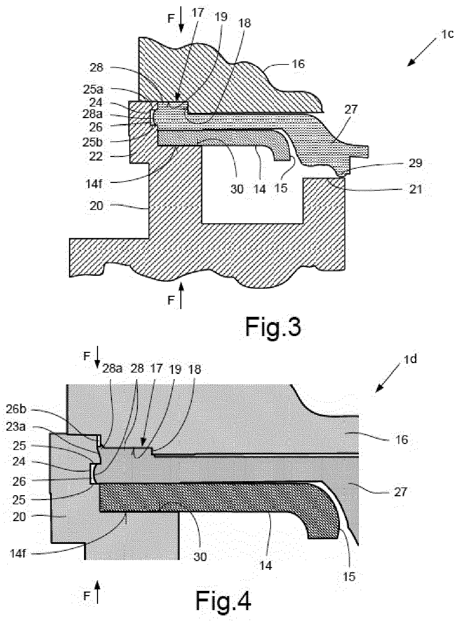

Die Membranventilanordnung 1c gemäß Fig. 3 unterscheidet sich von der Membranventilanordnung 1b gemäß Fig. 2 nur dadurch, dass die Ringnut beziehungsweise der Aufnahmeraum 26 im axialen Vorsprung 22 des Gehäuseunterteils 20 rechteckig aus einer achsparallelen Fläche 24 und zwei parallelen, radial umlaufenden Flächen 25a, 25b gebildet ist, in die der elastische Werkstoff 28a des Dichtungswulstes 28 verdrängt ist, ohne den Aufnahmeraum 26 vollständig auszufüllen. Durch den Aufnahmeraum 26 in Verbindung in dem da hinein verdrängten elastischen Werkstoff 28a ist eine zusätzliche axiale und radiale Dichtungsanordnung gebildet.

Gemäß Fig. 4 kann eine zusätzliche Dichtungsanordnung an einer Membranventilanordnung 1d auch durch eine umlaufende Schrägfläche 23a an dem ringförmigen, axialen Vorsprung 22 des Gehäuseunterteils 20 und einen Spalt 26b als Aufnahmeraum zwischen dem ringförmigen, axialen Vorsprung 22 am Gehäuseunterteil 20 und dem Gehäuseoberteil 16 gebildet sein, in die verdrängter elastischer Werkstoff 28a gelangen kann, ohne den Spalt 26b vollständig auszufüllen. Bei dieser Membranventilanordnung 1d sind demnach zwei zusätzliche Dichtungsanordnungen mit axialem Abstand voneinander ausgebildet, nämlich der Aufnahmeraum 26 und der Spalt 26b.

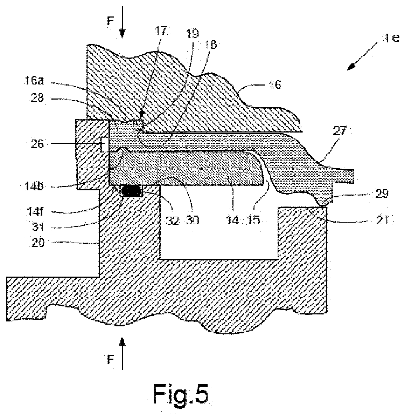

Die Membranventilanordnung 1e gemäß Fig. 5 unterscheidet sich von den Membranventilanordnungen gemäß den Figuren 2 bis 4 dadurch, dass der Dichtungswulst 28 mit rechteckigen Querschnitt an der Ventilmembran 27 in der Ringnut 17, gebildet aus der achsparallelen Fläche 18 und der Radialfläche 19 am Gehäuseoberteil 16 und dem ringförmigen axialen Vorsprung 22, angeordnet ist und bis auf Toleranzunterschiede die gleichen Abmessungen wie die Ringnut 17 aufweist. Um den Bereich der Ventilmembran 27 mit dem Dichtungswulst 28 unter der Einwirkung der Klemmkraft F im erforderlichen Ausmaß zu komprimieren, weist das Gehäuseoberteil 16 in dessen nutbezogenen Radialfläche 19 einen nach axial innen ragenden Ringwulst 16a auf, während die die Ventilmembran 27 unterstützende Scheibe 14a mit einem nach axial außen weisenden Ringwulst 14b versehen ist. Hierdurch wird elastisches Material des Dichtungswulstes 28 in eine einen Aufnahmeraum 26 für den verdrängten elastischen Werkstoff bildenden Umfangsnut im Vorsprung 22 verdrängt, wodurch eine erste zusätzliche Dichtungsanordnung gebildet ist. Des Weiteren ist im Gehäuseunterteil 20 im Bereich der Auflagefläche 30 für die die Ventilmembran 27 unterstützende Scheibe 14a eine Ringnut 31 zur Aufnahme eines O-Rings 32 angeordnet, wodurch eine zweite, zusätzliche radiale Dichtungsanordnung gebildet ist.

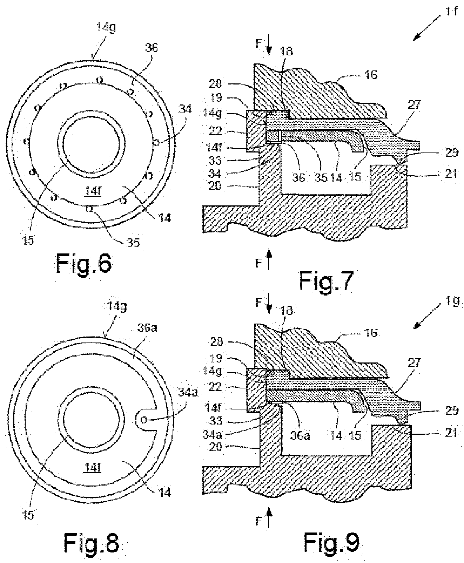

Die Ausführungsbeispielen gemäß den Figuren 6 bis 11 zeigen zusätzliche Dichtungsanordnungen an Membranventilanordnungen 1f, 1g, 1h in Verbindung mit der die Ventilmembran 27 unterstützenden Scheibe 14, 14c, wobei die Ausführungsbeispiele von Figuren 6 bis 11 nicht zu der Erfindung gemäß dem Hauptanspruch 1 gehören.

Gemäß den Figuren 6 und 7 ist eine Beschichtung 36 aus LSR-Silikonkautschuk oder aus Gummi an die die Ventilmembran 27 unterstützende Scheibe 14 angespritzt beziehungsweise anvulkanisiert. Das Anspritzen des LSR-Silikonkautschuks (LSR = Liquid Silicone Rubber) erfolgt von einer Angussöffnung 34 aus, wobei zur besseren Haftung an der die Ventilmembran 27 unterstützenden Scheibe 14 mehrere Axialbohrungen 35 gleichmäßig und ringförmig verteilt in der die Ventilmembran 27 unterstützenden Scheibe 14 ausgebildet sind. Die angespritzte oder anvulkanisierte Beschichtung 36 aus LSR-Silikonkautschuk oder aus Gummi liegt auf einer Auflagefläche 33 des Gehäuseunterteils 20 auf und dichtet die Scheibe 14 axial und radial gegenüber dem ringförmigen axialen Vorsprung 22 des Gehäuseunterteils 20 ab.

Das Ausführungsbeispiel der Membranventilanordnungen 1g gemäß den Figuren 8 und 9 unterscheidet sich von den Ausführungsbeispielen gemäß den Figuren 6 und 7 dadurch, dass in der Scheibe 14 keine Axialbohrungen 35 ausgebildet sind, und dass eine Angussöffnung 34a radial nach innen verlagert angeordnet ist, wodurch sich die angespritzte oder anvulkanisierte Beschichtung 36a aus LSR-Silikonkautschuk oder aus Gummi vergleichsweise schmaler ausführen lässt.

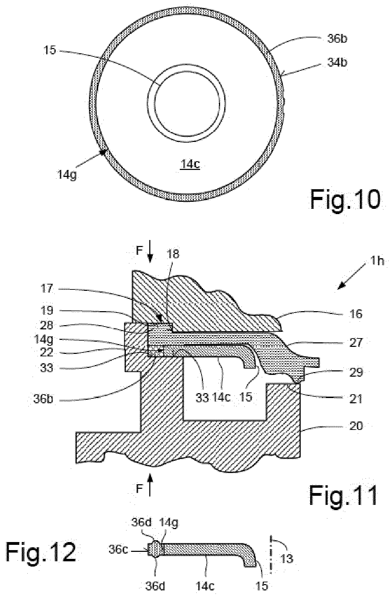

Das Ausführungsbeispiel der Membranventilanordnungen 1h gemäß den Figuren 10 bis 12 unterscheidet sich von den der Membranventilanordnungen gemäß den Figuren 6 bis 9 dadurch, dass der Durchmesser der radialen Außenfläche 14g der die Ventilmembran 27 unterstützenden Scheibe 14c kleiner ist als der Innendurchmesser des ringförmigen axialen Vorsprungs 22 am Gehäuseunterteil 20. An die radiale Außenfläche 14g der Scheibe 14c ist über eine Angussöffnung 34b eine Dichtung 36b angespritzt oder anvulkanisiert, die aus LSR-Silikonkautschuk oder aus Gummi besteht und den Ringraum zwischen der Scheibe 14c, der Ventilmembran 27, dem ringförmigen, radialen Vorsprung 22 am Gehäuseunterteil 20 und der Auflagefläche 33 für die die Ventilmembran 27 unterstützende Scheibe 14c so ausfüllt, dass eine zusätzliche axiale und radiale Dichtungsanordnung gebildet ist.

Wie die Längsschnittansicht gemäß Fig. 12 veranschaulicht, kann die radial außen an der Scheibe 14c angespritzte Dichtung 36b aus Silikonkautschuk oder Gummi zwei in entgegengesetzte axiale Richtungen weisende Ringwülste 36c, 36d aufweisen, die beim Zusammensetzen von Gehäuseoberteil 16 und Gehäuseunterteil 20 abdichtend beispielsweise in entsprechend zugeordnete Aufnahmenuten eingepresst werden.

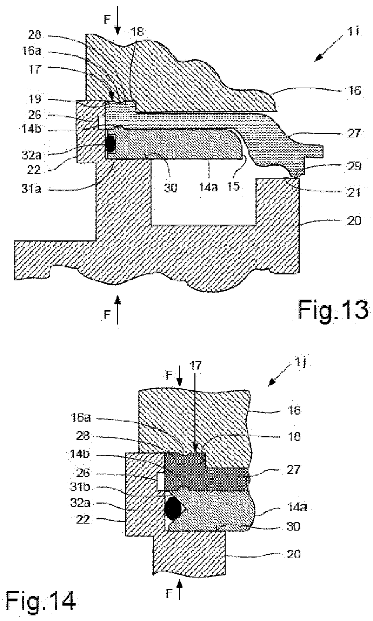

Das Ausführungsbeispiel der Membranventilanordnungen 1i, 1j gemäß den Figuren 13 und 14 unterscheiden sich von dem Ausführungsbeispiel gemäß Fig. 5 nur dadurch, dass im Außenumfang der die Ventilmembran 27 unterstützenden Scheibe 14a jeweils eine radiale Ringnut 31a, 31b zur Aufnahme eines O-Rings 32a ausgebildet ist. Dieser O-Ring 32a dient zur axialen und radialen Abdichtung der die Ventilmembran 27 unterstützenden Scheibe 14a gegenüber dem ringförmigen axialen Vorsprung 22 am Gehäuseunterteil 20 in axialer Richtung.

Gemäß Fig. 13 hat die Ringnut 31a in der Scheibe 14a einen Rechteckquerschnitt, während die Ringnut 31b bei dem Ausführungsbeispiel gemäß Fig. 14 einen Dreieckquerschnitt aufweist. Der Dichtungswulst 28 der Ventilmembran 27 ist wie bei dem Ausführungsbeispiel gemäß Fig. 5 durch den axial ausgerichteten Ringwulst 14b an der Scheibe 14a und den axial ausgerichteten Ringwulst 16a an der Radialfläche 19 des Gehäuseoberteils 16 in radialer Richtung abgedichtet. Der durch das gegenseitige Verspannen des Gehäuseoberteils 16 gegenüber dem Gehäuseunterteil 20 mittels der Klemmkraft F verdrängte elastische Werkstoff gelangt, wie bei dem Ausführungsbeispiel gemäß Fig. 5, in die Umfangsnut 26, welche in dem ringförmigen axialen Vorsprung 22 des Gehäuseunterteils 20 ausgebildet ist.

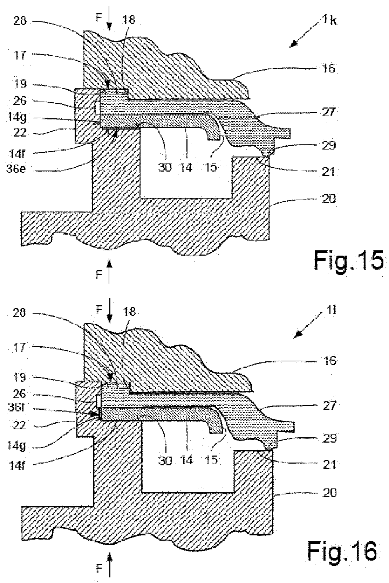

Das Ausführungsbeispiel der Membranventilanordnungen 1k, 1l, 1m, 1n gemäß den Figuren 15 bis 18 unterscheiden sich von den Ausführungsbeispielen Membranventilanordnungen 1f, 1g gemäß den Figuren 6 bis 9 dadurch, dass gemäß Fig. 15 eine Klebstoffschicht 36e als Dichtungsmittel zwischen der Auflagefläche 30 am Gehäuseunterteil 20 und der komplementären Ringfläche 14f an der die Ventilmembran 27 unterstützenden Scheibe 14 angeordnet ist.

Gemäß der in Fig. 16 gezeigten Ausführungsvariante ist dieses Dichtungsmittel 36f zwischen der radialen Außenfläche 14g der die Ventilmembran 27 unterstützenden Scheibe 14 und dem ringförmigen axialen Vorsprung 22 des Gehäuseunterteils 20 angeordnet.

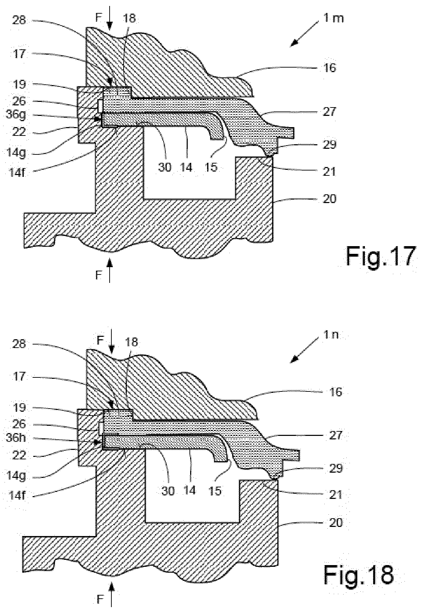

Bei der Ausführungsvariante gemäß Fig. 17 ist das Dichtungsmittel 36g im Querschnitt gesehen L-förmig ausgebildet und an der die Ventilmembran 27 unterstützenden Scheibe 14 im Bereich der Auflagefläche 30 am Gehäuseunterteil 20 und dem ringförmigen radialen Vorsprung 22 des Gehäuseunterteils 20 angeordnet.

Gemäß der in Fig. 18 gezeigten Ausführungsvariante ist das Dichtungsmittel 36h im Querschnitt gesehen C-förmig auf dem radial äußeren Randbereich der die Ventilmembran 27 abstützenden Scheibe 14 allseitig angeordnet.

Das Dichtungsmittel kann in allen genannten Beispielen gemäß den Figuren 15 bis 18 aus einem Klebstoff oder aus einem in Mikrokapseln eingeschlossenen Dichtungsmittel oder aus einem flüssigen, aushärtbaren, aber elastisch bleibenden Dichtungsmittel bestehen, die weitere zusätzliche Dichtungsanordnungen bilden.

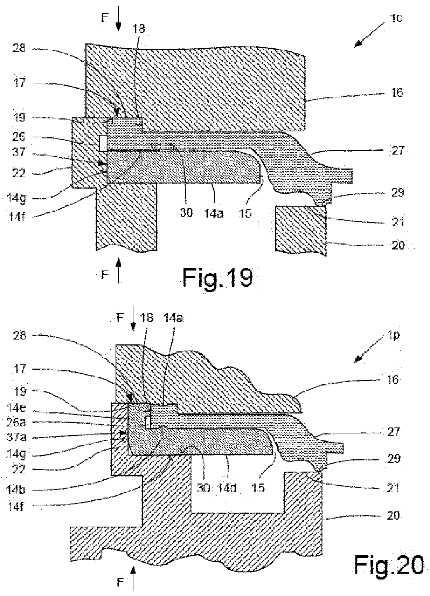

Schließlich ist es auch noch möglich, weitere zusätzliche Dichtungsanordnungen an Membranventilanordnungen 1o, 1p gemäß den Figuren 19 und 20 auszubilden, die gemäß Fig. 19 darin besteht, dass die die Ventilmembran 27 unterstützende Scheibe 14a mit einem dichtenden Presssitz 37 in den ringförmigen radialen Vorsprung 22 des Gehäuseunterteils 20 eingepasst ist. Ähnlich kann gemäß Fig. 20 die die Ventilmembran 27 unterstützende Scheibe 14d einen ringförmigen axialen Vorsprung 14e aufweisen, der mit einem dichtenden Presssitz 37a in den ringförmigen radialen Vorsprung 22 des Gehäuseunterteils 20 eingepasst ist.

Alle dargestellten und beschriebenen Ausführungsformen bzw. Ausführungsbeispielen gemäß den Figuren 1 bis 20 beruhen auf der Überlegung, dass sich durch zusätzliche Dichtungsanordnungen zwischen dem Gehäuseoberteil 2, 16 und dem Gehäuseunterteil 6, 20 die Klemmkraft F besser kontrollieren und einstellen lässt. Hierdurch wird gewährleistet, dass der Dichtungswulst 11, 28 nicht durch eine zu hohe Klemmkraft F beschädigt wird, wobei dennoch die Dichtwirkung zwischen dem Gehäuseoberteil 2, 16 und dem Gehäuseunterteil 6, 20 verbessert ist.

### Bezugszeichenliste (Bestandteil der Beschreibung)

- 1a -1p: Membranventilanordnung
- 2: Gehäuseoberteil
- 3: Ringnut
- 4: Axiale Schrägfläche am Gehäuseoberteil 2
- 4a: Radialfläche am Gehäuseoberteil 2
- 5: Aufnahmeraum
- 6: Gehäuseunterteil
- 7: Ventilsitz am Gehäuseunterteil 6
- 8: Ringförmiger axialer Vorsprung am Gehäuseunterteil 6, gebildet beispielsweise durch eine stirnseitige Einsenkung im Gehäuseunterteil 6
- 9: Axiale Ringfläche am Vorsprung 8 des Gehäuseunterteils 6
- 10: Ventilmembran
- 11: Dichtungswulst an der Ventilmembran 11
- 11a: Verdrängter, elastischer Werkstoff des Dichtungswulstes 11
- 12: Dichtlippe an der Ventilmembran 10
- 13: Mittelachse der Membranventilanordnung
- 14: Die Ventilmembran unterstützende Scheibe
- 14a: Die Ventilmembran unterstützende Scheibe
- 14b: Ringwulst an der Scheibe 14a
- 14c: Die Ventilmembran unterstützende Scheibe
- 14d: Die Ventilmembran unterstützende Scheibe
- 14e: Ringförmiger axialer Vorsprung der Scheibe 14d
- 14f: Komplementäre Ringfläche der Scheibe 14, 14a, 14c, 14d
- 14g: Radiale Außenfläche der Scheibe14, 14a, 14c, 14d
- 15: Zentrische Durchbrechung in der Scheibe 14, 14a, 14c, 14d
- 16: Gehäuseoberteil
- 16a: Ringwulst am Gehäuseoberteil 16
- 17: Ringnut
- 18: Achsparallele Fläche am Gehäuseoberteil 16
- 19: Radialfläche am Gehäuseoberteil 16
- 20: Gehäuseunterteil
- 21: Ventilsitz am Gehäuseunterteil 20
- 22: Ringförmiger, axialer Vorsprung am Gehäuseunterteil 20, gebildet beispielsweise durch eine stirnseitige Einsenkung im Gehäuseunterteil 20
- 22a: Axiale Ringfläche am Gehäuseunterteil 20
- 23: Umlaufende Schrägfläche am Gehäuseunterteil 20
- 23a: Umlaufende Schrägfläche am Gehäuseunterteil 20
- 24: Achsparallele Fläche am Gehäuseunterteil 20
- 25a: Erste radial umlaufende Fläche des Aufnahmeraums 26
- 25b: Zweite radial umlaufende Fläche des Aufnahmeraums 26
- 26: Umfangsnut bzw. Aufnahmeraum in Vorsprung 22
- 26a: Umfangsnut bzw. Aufnahmeraum in Vorsprung 22
- 26b: Ringförmiger Spalt als Aufnahmeraum
- 27: Ventilmembran
- 28: Dichtungswulst an Ventilmembran 27
- 28a: Verdrängter, elastischer Werkstoff vom Dichtungswulst 28
- 29: Dichtlippe an Ventilmembran 27
- 30: Ringförmige Auflagefläche am Gehäuseunterteil 6, 20
- 31a: Ringnut im Gehäuseunterteil 20 (1. Ausführung)
- 31b: Ringnut im Gehäuseunterteil 20 (2. Ausführung)
- 32: O-Ring (1. Ausführung gemäß Fig. 5)
- 32a: O-Ring (2. Ausführung gemäß Fig. 13 und 14)
- 33: Auflagefläche am Gehäuseunterteil 20
- 34: Angussöffnung (1. Ausführung) in der Scheibe 14
- 34a: Angussöffnung (2. Ausführung) in der Scheibe 14
- 35: Axialbohrungen in der Scheibe 14
- 36: Angespritzte oder anvulkanisierte Beschichtung (1. Ausführung)
- 36a: Angespritzte oder anvulkanisierte Beschichtung (2. Ausführung)
- 36b: Angespritzte oder anvulkanisierte Dichtung
- 36c: Erster Ringwulst an Dichtung 36b
- 36d: Zweiter Ringwulst an Dichtung 36b
- 36e: Radiales Dichtungsmittel
- 36f: Axiales Dichtungsmittel
- 36g: L-förmiges Dichtungsmittel
- 36h: C-förmiges Dichtungsmittel
- 37: Dichtender Presssitz
- 37a: Dichtender Presssitz
- F: Klemmkraft

## Patentansprüche

1. Membranventilanordnung (1a, 1b, 1c, 1d, 1e, 1f, 1g, 1h, 1i, 1j, 1k, 11, 1m, 1n, 1o, 1p), beispielsweise in einer Ventileinrichtung eines Anti-Blockiersystems eines Kraftfahrzeugs, aufweisend eine aus einem elastischen Werkstoff bestehende scheibenförmige Ventilmembran (10, 27), eine Scheibe (14, 14a, 14c, 14d) mit einer zentrischen Durchbrechung (15), ein Gehäuseoberteil (2, 16) mit einem axialen Absatz und ein Gehäuseunterteil (6, 20) mit einem radial umfassenden, ringförmigen, axialen Vorsprung, wobei in einer gehäuseoberteilnahen Stirnseite des Gehäuseunterteils (6, 20) eine kreisförmige Ausnehmung gebildet ist, wobei die Ventilmembran (10, 27) mit einer ihrer beiden Seiten auf der Scheibe (14, 14a, 14c, 14d) angeordnet ist, wobei die Ventilmembran (10, 27) an ihrer scheibenfernen Seite radial außen einen umlaufenden Dichtungswulst (11, 28) aufweist, wobei die Scheibe (14, 14a, 14c, 14d) zusammen mit der Ventilmembran (10, 27) zwischen dem Gehäuseoberteil (2, 16) und dem Gehäuseunterteil (6, 20) der Membranventilanordnung (1) angeordnet ist, und bei dem der Dichtungswulst (11, 28) zwischen dem Gehäuseoberteil (2, 16) und dem Gehäuseunterteil (6, 20) eingespannt ist, wobei am Gehäuseoberteil (2, 16) und/oder am Gehäuseunterteil (6, 20) im Bereich des Dichtungswulstes (11, 28) und/oder im radial äußeren Randbereich der die Ventilmembran (10, 27) unterstützenden Scheibe (14, 14a, 14c, 14d) wenigstens eine zusätzliche Dichtungsanordnung vorhanden ist, **dadurch gekennzeichnet,**
**dass** der Dichtungswulst (11, 28) der Ventilmembran (10, 27) in einer axialen Ringnut (3, 17) aufgenommen ist, welche durch den axialen Absatz im Gehäuseoberteil (2, 16) und dem radial umfassenden, ringförmigen, axialen Vorsprung (8, 22) des Gehäuseunterteils (6, 20) gebildet ist, wobei die axiale Ringnut (3, 17) so bemessen ist, dass der beim Verspannen des Gehäuseoberteils (2, 16) gegen das Gehäuseunterteil (6, 20) verdrängte elastische Werkstoff (11a, 28a) der Ventilmembran (10, 27) in wenigstens einen Aufnahmeraum (5, 26, 26a, 26b) der Ringnut (3, 17) gelangt, und wobei der wenigstens eine Aufnahmeraum (5; 26; 26a; 26b) zusammen mit dem verdrängten Werkstoff (11a, 28a) die zusätzliche Dichtungsanordnung bildet, dass der ringförmige, axiale Vorsprung (8, 22) des Gehäuseunterteils (6, 20) durch die kreisförmige Ausnehmung in der gehäuseoberteilnahen Stirnseite des Gehäuseunterteils (6, 20) gebildet ist, dass in dem ringförmigen axialen Vorsprung (22) des Gehäuseunterteils (20) im Bereich des Dichtungswulstes (28) ein Aufnahmeraum (26) durch eine radiale Umfangsnut gebildet ist, welche beim Verspannen des Gehäuseoberteils (16) gegen das Gehäuseunterteil (20) verdrängten elastischen Werkstoff (28a) der Ventilmembran (27) aufnimmt und eine zusätzliche, radiale und/oder axiale Dichtungsanordnung bildet, dass die den Aufnahmeraum (26) bildende radiale Umfangsnut im axialen Vorsprung (22) des Gehäuseunterteils (20) eine umlaufende Schrägfläche (23), eine umlaufende achsparallele Fläche (24) sowie eine radiale, umlaufende Fläche (25) aufweist,
**dass** an der umlaufenden Schrägfläche (23) die zusätzliche radiale Dichtwirkung erreicht wird, und dass der Aufnahmeraum (26) zusammen mit dem verdrängten Werkstoff (28a) des Dichtungswulstes (28) die zusätzliche radiale Dichtungsanordnung bildet.

## Claims

1. Diaphragm valve arrangement (1a, 1b, 1c, 1d, 1e, 1f, 1g, 1h, 1i, 1j, 1k, 1l, 1m, 1n, 1o, 1p), for example in a valve device of an anti-lock braking system of a motor vehicle, comprising a disk-shaped valve diaphragm (10, 27) made of a resilient material, a disk (14, 14a, 14c, 14d) having a central opening (15), an upper housing part (2, 16) having an axial shoulder and a lower housing part (6, 20) having a radially encompassing, annular, axial projection, a circular recess being formed in an end face of the lower housing part (6, 20) near the upper housing part, one of the two sides of the valve diaphragm (10, 27) being arranged on the disk (14, 14a, 14c, 14d), the valve diaphragm (10, 27) having a peripheral sealing bead (11, 28) radially on the outside on its side remote from the disk, the disk (14, 14a, 14c, 14d) being arranged together with the valve diaphragm (10, 27) between the upper housing part (2, 16) and the lower housing part (6, 20) of the diaphragm valve arrangement (1), and the sealing bead (11, 28) being clamped between the upper housing part (2, 16) and the lower housing part (6, 20), at least one additional sealing arrangement being present on the upper housing part (2, 16) and/or on the lower housing part (6, 20) in the region of the sealing bead (11, 28) and/or in the radially outer edge region of the disk (14, 14a, 14c, 14d) supporting the valve diaphragm (10, 27), **characterized in that** the sealing bead (11, 28) of the valve diaphragm (10, 27) is received in an axial annular groove (3, 17) which is formed by the axial shoulder in the upper housing part (2, 16) and the radially encompassing, annular, axial projection (8, 22) of the lower housing part (6, 20), the axial annular groove (3, 17) being dimensioned such that the resilient material (11a, 28a) of the valve diaphragm (10, 27) displaced when the upper housing part (2, 16) is clamped against the lower housing part (6, 20) reaches at least one receiving space (5, 26, 26a, 26b) of the annular groove (3, 17), and the at least one receiving space (5; 26; 26a; 26b) together with the displaced material (11a, 28a) forming the additional sealing arrangement, **in that** the annular, axial projection (8, 22) of the lower housing part (6, 20) is formed by the circular recess in the end face of the lower housing part (6, 20) near the upper housing part, **in that** a receiving space (26) is formed by a radial peripheral groove in the annular axial projection (22) of the lower housing part (20) in the region of the sealing bead (28), which radial peripheral groove, when the upper housing part (16) is clamped against the lower housing part (20), receives the displaced resilient material (28a) of the valve diaphragm (27) and forms an additional radial and/or axial sealing arrangement, **in that** the radial peripheral groove forming the receiving space (26) in the axial projection (22) of the lower housing part (20) has a peripheral inclined surface (23), a peripheral axially parallel surface (24) and a radial, peripheral surface (25),
**in that** the additional radial sealing effect is achieved on the peripheral inclined surface (23), **and in that** the receiving space (26) together with the displaced material (28a) of the sealing bead (28) forms the additional radial sealing arrangement.

## Revendications

1. Ensemble de soupape à membrane (1a, 1b, 1c, 1d, 1e, 1f, 1g, 1h, 1i, 1j, 1k, 1l, 1m, 1n, 1o, 1p), par exemple dans un dispositif formant soupape d'un système antiblocage d'un véhicule automobile, présentant une membrane de soupape (10, 27) en forme de disque constituée d'un matériau élastique, un disque (14, 14a, 14c, 14d) comportant une percée (15) centrale, une partie supérieure de boîtier (2, 16) comportant un épaulement axial et une partie inférieure de boîtier (6, 20) comportant une saillie axiale annulaire complète et radiale, dans lequel un évidement circulaire est formé dans un côté frontal de la partie inférieure de boîtier (6, 20), lequel côté frontal est proche de la partie supérieure de boîtier, dans lequel la membrane de soupape (10, 27) est disposée avec l'un de ses deux côtés sur le disque (14, 14a, 14c, 14d), dans lequel la membrane de soupape (10, 27) présente radialement à l'extérieur, sur son côté éloigné du disque, un bourrelet d'étanchéité (11, 28) circonférentiel, dans lequel le disque (14, 14a, 14c, 14d) est disposé, conjointement avec la membrane de soupape (10, 27), entre la partie supérieure de boîtier (2, 16) et la partie inférieure de boîtier (6, 20) de l'ensemble de soupape à membrane (1), et dans lequel le bourrelet d'étanchéité (11, 28) est enserré entre la partie supérieure de boîtier (2, 16) et la partie inférieure de boîtier (6, 20), dans lequel au moins un ensemble d'étanchéité supplémentaire est présent au niveau de la partie supérieure de boîtier (2, 16) et/ou au niveau de la partie inférieure de boîtier (6, 20), dans la zone du bourrelet d'étanchéité (11, 28) et/ou dans la zone marginale radialement extérieure du disque (14, 14a, 14c, 14d) supportant la membrane de soupape (10, 27), **caractérisé en ce que** le bourrelet d'étanchéité (11, 28) de la membrane de soupape (10, 27) est reçu dans une rainure annulaire (3, 17) axiale qui est formée par l'épaulement axial dans la partie supérieure de boîtier (2, 16) et par la saillie axiale annulaire (8, 22) complète et radiale de la partie inférieure de boîtier (6, 20), dans lequel la rainure annulaire (3, 17) axiale est dimensionnée de sorte que le matériau élastique (11a, 28a) de la membrane de soupape (10, 27) chassé lors du serrage de la partie supérieure de boîtier (2, 16) contre la partie inférieure de boîtier (6, 20) atterrit dans au moins un espace de réception (5, 26, 26a, 26b) de la rainure annulaire (3, 17), et dans lequel l'au moins un espace de réception (5 ; 26 ; 26a ; 26b) forme, conjointement avec le matériau (11a, 28a) chassé, l'ensemble d'étanchéité supplémentaire, **en ce que** la saillie axiale annulaire (8, 22) de la partie inférieure de boîtier (6, 20) est formée par l'évidement circulaire dans le côté frontal de la partie inférieure de boîtier (6, 20), lequel côté frontal est proche de la partie supérieure de boîtier, **en ce que,** dans la saillie axiale annulaire (22) de la partie inférieure de boîtier (20), dans la zone du bourrelet d'étanchéité (28), un espace de réception (26) est formé par une rainure circonférentielle radiale qui, lors du serrage de la partie supérieure de boîtier (16) contre la partie inférieure de boîtier (20), reçoit le matériau élastique (28a) chassé de la membrane de soupape (27) et forme un ensemble d'étanchéité radial et/ou axial supplémentaire, **en ce que** la rainure circonférentielle radiale formant l'espace de réception (26) dans la saillie axiale (22) de la partie inférieure de boîtier (20) présente une surface biseautée circonférentielle (23), une surface circonférentielle parallèle à un axe (24), ainsi qu'une surface circonférentielle radiale (25),
**en ce que** l'effet d'étanchéité radial supplémentaire est obtenu sur la surface biseautée circonférentielle (23), **et en ce que** l'espace de réception (26) forme, conjointement avec le matériau (28a) chassé du bourrelet d'étanchéité (28), l'ensemble d'étanchéité radial supplémentaire.
